# EUROPEAN PATENT SPECIFICATION

(11) **EP 2 999 187 B1**
(45) Date of publication and mention of the grant of the patent: **15.11.2017**
(21) Application number: 14306439.2
(22) Date of filing: 18.09.2014
(51) Int. Cl.: H04L 29/06, H04L 29/08

(54) **Method, computer program product and server for streaming media content from a server to a client**
Verfahren, Computerprogrammprodukt und Server zum Streaming von Medieninhalten von einem Server zu einem Client
Procédé, produit de programme informatique et serveur de contenu multimédia en diffusion continue depuis un serveur vers un client

(43) Date of publication of application: 23.03.2016
(73) Proprietor: ALCATEL LUCENT, 92100 Boulogne-Billancourt (FR)
(72) Inventor: Huysegems, Rafaël, 2018 Antwerpen (BE); De Vleeschauwer, Bart, 2018 Antwerpen (BE); Verzijp, Nico, 2018 Antwerpen (BE); Van Broeck, Sigurd, 2018 Antwerpen (BE)
(74) Representative: ALU Antw Patent Attorneys

(56) References cited:
- FRANCK DENOUAL ET AL: "[CE-FDH] Use of HTTP2 Push feature for DASH improvement", 109. MPEG MEETING; 7-7-2014 - 11-7-2014; SAPPORO; (MOTION PICTURE EXPERT GROUP OR ISO/IEC JTC1/SC29/WG11),, no. m33665, 13 June 2014 (2014-06-13), XP030062038,
- TATSUYA IGARASHI ET AL: "Use of web socket for DASH content delivery", 109. MPEG MEETING; 7-7-2014 - 11-7-2014; SAPPORO; (MOTION PICTURE EXPERT GROUP OR ISO/IEC JTC1/SC29/WG11),, no. m34349, 2 July 2014 (2014-07-02), XP030062722,
- SHENG WEI ET AL: "Low Latency Live Video Streaming over HTTP 2.0", PROCEEDINGS OF NETWORK AND OPERATING SYSTEM SUPPORT ON DIGITAL AUDIO AND VIDEO WORKSHOP, 19 March 2014 (2014-03-19), pages 37-42, XP055177918, DOI: 10.1145/2578260.2578277
- DANIEL STENBERG: "HTTP2 explained", COMPUTER COMMUNICATION REVIEW, ACM, NEW YORK, NY, US, vol. 44, no. 3, 28 July 2014 (2014-07-28), pages 120-128, XP058056913, ISSN: 0146-4833, DOI: 10.1145/2656877.2656896
- Anonymous: "Sapporo Meeting - Document register", , 1 January 2014 (2014-01-01), pages 1-3, XP055344641, Retrieved from the Internet: URL:http://mpeg.chiariglione.org/meetings/ 109 [retrieved on 2017-02-10]
- "Descriptions of Core Experiments on DASH amendment", 109. MPEG MEETING;7-7-2014 - 11-7-2014; SAPPORO; (MOTION PICTURE EXPERT GROUP OR ISO/IEC JTC1/SC29/WG11),, no. N14619, 7 August 2014 (2014-08-07), XP030021357,

## Description

### Field of invention

The field of the invention relates to streaming media content from a server to a client. In particular, the invention relates to a method for streaming media content from a server to a client, a computer program product for streaming media content from a server to a client and a server for streaming media content to a client.

### Background

In recent years, the demand for streaming media content, such as video and/or audio content, has rapidly increased. In particular the number of over the top (OTT) video delivery applications, such as YouTube and NetFlix, has increased. Over the top content delivery refers to delivery of content over the public internet.

In particular, HTTP adaptive streaming (HAS) is rapidly becoming the most popular method for streaming media content. One of the major advantages of HAS is its ability to adapt the video quality to the bandwidth (BW) conditions in the network, in order to avoid video rebuffering, resulting in a freeze of the playout. Although the introduction of HAS was a major improvement over the conventional progressive download method, HTTP adaptive streaming also has the disadvantage that a new HAS stream can take several seconds before the playout can commence. Furthermore, when the user switches channels, a similar zap-delay occurs.

Technologies for adaptive streaming over HTTP include Smooth Streaming (Microsoft), HTTP Live Streaming (Apple) and Dynamic Adaptive Streaming over HTTP (MPEG-DASH). In the context of the invention the term HAS will be used to refer to all such adaptive streaming over HTTP technologies. Furthermore, the term HAS will also used for streaming over the SPDY protocol, which is a protocol related to the HTTP protocol.

Use of HTTP2 Push feature for DASH improvement is described in a document (XP030062038) in the name of Franck Denoual ET AL, published in relation to the Sapporo Meeting of 7-14 June 2014.

### Summary

The invention is defined in independent server claim 1, independent method claim 13 and in independent claim 14 related to a computer program product. An object of embodiments of the invention is to reduce the delay in playout when starting a stream or when changing a channel.

According to an embodiment of the present invention, there is provided a server for streaming media content to a client. The media content is encoded as at least one stream, which is divided into consecutive segments. The server comprises a receiver configured to receive a request from the client for a manifest file. The manifest file comprises metadata of the at least one stream. The server further comprises a transmitter configured to send the requested manifest file to the client in response to the request. The transmitter is further configured to push to the client a selected segment of the consecutive segments of the at least one stream in response to the request for the manifest file.

The media content may be video, audio and/or text. For example, the manifest file may comprise metadata describing the different available quality levels, i.e. the available streams at different bitrates.

In a first example, a manifest file provides a template that can be used to obtain the location, e.g. URL, of the individual segments of each stream. In a second example, the manifest file includes a list of the locations, e.g. URLs, of the segments of each stream. In a third example, a first manifest file lists the locations, e.g. URLs, of further manifest files, one for each available bitrate. The further manifest files lists the locations, e.g. URLs, of the segments of the stream at the corresponding bitrate or provides a template for obtaining said locations.

Pushing a selected segment in addition to the requested manifest file has the advantage that a Round Trip Time (RTT) for requesting the selected by the client and sending the requested segment by the server can be avoided. In other words, the number of RTTs of communication between the client and the server is reduced. In conventional methods, only the requested manifest file would be returned in response to a client request for a manifest file. Subsequently, the client would request a segment on the basis of the metadata in the manifest file. Therefore, conventionally multiple RTTs are required to initialize playout of a stream. According to the invention, the number of RTTs is reduced and playout can be started earlier.

In an embodiment, the server is configured for adaptive streaming of the media content, wherein the media content is encoded as at least two streams encoded at different bitrates. In this embodiment, the manifest file comprises metadata of the at least two streams. The transmitter is configured to push a selected segment of the consecutive segments of a selected one of the at least two streams in response to the request for the manifest file.

For adaptive streaming, the quality of the stream, e.g. the video and/or audio quality, is adapted according to the available bandwidth and CPU capacity of the client. This corresponds to adapting the bitrate transferred from the server to the client. The media content is encoded as at least two streams, wherein each stream has a different bitrate. Each stream is divided into consecutive segments, also called chunks, of typically 2-6 seconds although other durations are also within the scope of the invention. The client can switch between the different bitrates by requesting segments of a stream of appropriate bitrate according to current bandwidth and CPU capacity. Freezing due to buffer underrun can thereby often be avoided.

Pushing a segment in response to request for a manifest file speeds up the initialization of the stream. Therefore, the streamed video and/or audio may start playing earlier.

The selected one of the two streams may be selected by the client. For example, the client may request a manifest file corresponding to a stream having a particular bitrate.

In an embodiment the server is configured to select as the selected one of the at least two streams the stream having the lowest bitrate.

In an embodiment the server is configured to select as the selected one of the at least two streams the stream having a bitrate previously used by the clients. For example, the server maintains a client state and/or session state registering the bitrate used by one or more clients.

In an embodiment the server is configured to estimate a bitrate based on network parameters and the server is further configured to select as the selected one of the at least two streams the stream having a bitrate corresponding to the estimated bitrate. Preferably, the bitrate is estimated by the server. For example, when a client requests a manifest file, the server estimates the available bandwidth for the clients, selects a stream corresponding to the estimated bitrate and pushes to the client a segment of the stream corresponding to the estimated bitrate in response to the request for the manifest file.

In an embodiment the server is configured to communicate with the client according to a web protocol supporting server push.

An advantage of using a web protocol is that use can be made of the existing infrastructure of the internet. Furthermore, the segments of the stream can be transported through firewalls without problems.

In an embodiment, the protocol is an HTTP protocol or a SPDY protocol, preferably HTTP 2.0 or later.

An advantage of using the HTTP or SPDY protocol is that use can be made of the existing HTTP infrastructure of the internet. For example, HTTP-servers, HTTP-proxies and Content Delivery Networks (CDNs) can be reused to deliver HAS content. Furthermore, the segments of the stream can be transported through firewalls without problems.

In the context of the invention, the term HTTP also encompasses HTTPS, as technically HTTPS is HTTP on top of the SSL/TLS protocol.

Preferably, the server is configured for HTTP adaptive streaming using a HTTP based protocol supporting server push, such as HTTP 2.0 or later, or the SPDY protocol.

In an embodiment, the server may be configured to establish a persistent connection between the server and the client. For example, the connection may be a TCP connection.

In an embodiment, the transmitter is configured to push the selected segment from the server to the client before sending the requested manifest file to the client.

Clients may not be aware of the fact that the server will push a segment in response to a request for a manifest file. Therefore, when the client receives a manifest file from the server, it may unnecessarily send a request for the segment the server is about to push. By pushing the segment with the server before sending the manifest file, requests for the same segment by the client may be avoided.

However, in an alternative embodiment, the manifest file may be sent before the segment is pushed.

In an embodiment the media content is encoded as at least one video on demand stream (VoD stream), wherein the server is configured to select as the selected segment the first of the consecutive segments of the corresponding stream.

For a video on demand stream, the manifest file will typically include a reference to all segments of the stream, including the first segment of the stream. Therefore, in case the client requests a video on demand stream, the server may preferably be configured to push said first segment.

In an embodiment the media content is encoded as at least one linear stream, also known as live stream, and the server is configured to select as the selected segment the segment which precedes the most recent segment of the corresponding stream by a predetermined delay.

In case of a linear stream, the manifest file is regularly updated by the server, as new segments are added continuously. Instead of sending the most recent segment, the server sends a segment preceding the most recent segment by a predetermined delay. This allows the client to fill its buffer for playout of the stream. Thereby, buffer underrun can often be prevented, reducing the occurrence of freezing of the playback of the live stream. The segment preceding the most recent segment by a predetermined delay is selected and the selected segment is pushed to the client as a further response to the request for the manifest file of the linear stream. Typically the delay is in the order of seconds, e.g. 2-30 seconds.

In a further embodiment, the server is configured to set the delay according to a delay previously used by the client.

For example, the server maintains a client state and/or session state wherein the delay parameters by a client are registered.

In an embodiment the transmitter is configured to push the selected segment to the client in response to the request for the manifest file, if
- the server is currently streaming different media content to the client than the media content corresponding to the requested manifest file; or
- the server is currently not streaming media content to the client.

In other words, in this embodiment the selected segment is pushed when initializing the streaming of media content. In particular, a stream is initialized when a client requests media content from the server for the first time or when the client switches between different media content, also known as channel zap.

A channel zap may be detected by the server by determining that the client requests a manifest file corresponding to media content different from the media content currently being streamed to the client. The server detects that the client initializes streaming of media content for the first time for the current session between server and client, if the server determines that it is currently not streaming any media content to the client when receiving the request for a manifest file.

Preferably, the selected segment is pushed only when the server detects that the client performs a channel zap or a first request for streaming media content.

It is noted that for a linear stream, the manifest file is regularly updated to incorporate newly created segments of the linear stream. In that case, however, the client is still receiving segments corresponding to the same media content and in one embodiment the server will not push a segment in response to the request by the client for an updated manifest file of the linear stream.

In an embodiment the transmitter is further configured to push to the client further data in response to the request for the manifest file, such as DRM data.

Pushing further data in response to the request for the manifest file is advantageous in case further data is needed to initialize the playout of the media content. For example, DRM data may be required to initialize playout. In that case the server pushes the selected segment and the DRM data to the client in response to the manifest file, as well as responding with the requested manifest file.

In an embodiment the server is configured to use different stream priorities to control the delivery sequence of pushed data and pulled data.

In this case, pulled data refers to data requested by the client, such as the requested manifest file.

Further embodiments of the invention relate to a method for streaming media content from a server to a client. The media content is encoded as at least one stream, which is divided into consecutive segments. The method comprises receiving with the server a request from the client for a manifest file. The manifest file comprises metadata of the at least one stream. The method further comprises sending with the server the requested manifest file to the client in response to the request. The method further comprises pushing from the server to the client a selected segment of the consecutive segments of the at least one stream in response to the request for the manifest file.

Further embodiments of the invention relate to a computer program product comprising non-transitory computer executable instructions configured to, when executed, perform the steps of the method as described above.

The same effects and advantages as described above with respect to the server apply to the method and the computer program product.

### Brief description of the figures

The accompanying drawings are used to illustrate presently preferred non-limiting exemplary embodiments of the present invention. The above and other advantages of the features and objects of the invention will become more apparent and the invention will be better understood from the following detailed description when read in conjunction with the accompanying drawings, in which:
Figure 1 schematically shows the communication between a client and a server for starting playout of a stream according to the prior art.
Figures 2A and 2B schematically shows the communication between a client and a server in accordance with an embodiment of the invention, wherein in figure 2A the manifest file is sent before a segment is pushed and in figure 2B the manifest file is sent after a segment has been pushed.
Figure 3 schematically shows an HTTP adaptive streaming client as a browser plugin in accordance with an embodiment of the invention.
Figure 4 schematically shows an HTTP adaptive streaming client as a stand-alone application in accordance with an embodiment of the invention.
Figure 5 shows a content distribution network delivery appliance in accordance with an embodiment of the invention.
Figure 6 shows a flow diagram of a first embodiment of the method according to the invention.
Figure 7 shows a flow diagram of a second embodiment of the method of the invention.
Figure 8 shows a flow diagram of a third embodiment of the method of the invention.
Figure 9 shows a flow diagram of a fourth embodiment of the method of the invention.

### Description of embodiments

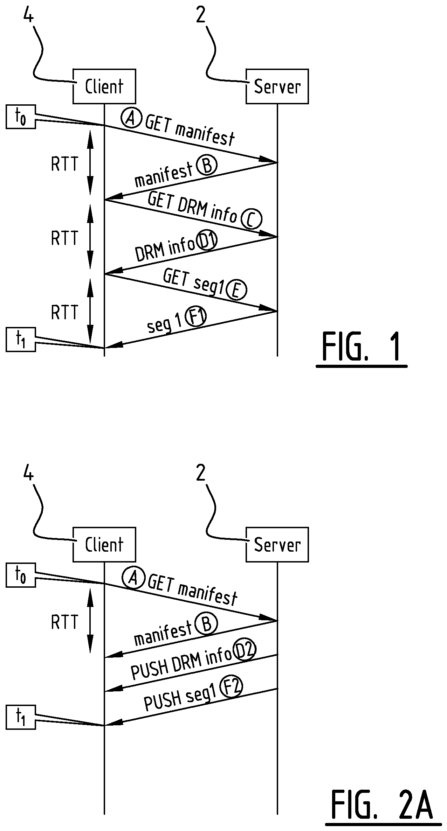

A HAS implementation (figure 1) comprises a server 2 and a client 4. In a conventional implementation, the client sends a request A "get manifest" to the server. The server responds by returning the manifest B to the client. The client reads the manifest B. The manifest B comprises metadata of the segments of the streams of the media content and may comprise further information, such as DRM data required for playing the media content. In particular, the manifest B comprises an index of the segments of the at least one stream encoding the media content

In the example shown, the manifest B comprises DRM data. The client requests DRM data by sending "get DRM info" request C to the server 2. The server 2 responds by sending the DRM data D1 to the client 4. It is noted that requesting DRM data and sending DRM data is optional, e.g. the media content may not be protected by DRM.

Next, the client 4 requests the first segment of the stream by sending a request E "get segment 1" to the server 2.

Subsequently, the server responds by sending a first segment F1 to the client 4. Therefore, in this conventional implementation, the process of initializing playout takes three Round Trip Times (RTTs) from time t₀ when the client 4 requests the manifest file to time t₁ when the client can start playout of the stream. In particular, when the client 4 is changing channels (zapping) or is otherwise initializing playout of media content, the number of RTTs leads to a noticeable delay.

In particular, in 2012 the "Conviva viewer experience report" analyzed 22,6 billion video streams in 190 countries and came to the conclusion that 19,5 % of the sessions was impacted by slow video startup. The report further points out that when the start time exceeds 2 seconds, the number of people that abandon viewing increases 400% in case of video on demand (VoD) and 140% in case of linear streaming.

According to an embodiment of the invention, the client 4 sends a request A for a manifest to the server 2 (figure 2A). The server 2 responds by sending the manifest B to the client and also pushing the DRM data D2 and pushing the first segment F2. Therefore, only one RTT is required to start the playout of the requested stream. Again, use of DRM data is optional, e.g. the server 2 may push other data instead of DRM data or may push segment F1 only.

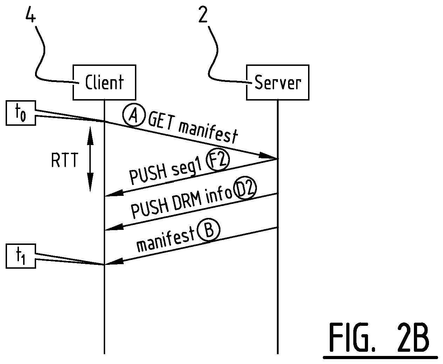

In a preferred embodiment (figure 2B), the server pushes the segment F2 in response to the request A of the client before sending the manifest file B to the client. This embodiment has the advantage that pulling of segment F2 by the client is avoided. Pushing DRM data D2 is again optional, and furthermore, the DRM data D2 may alternatively be pushed before the segment F2 is pushed.

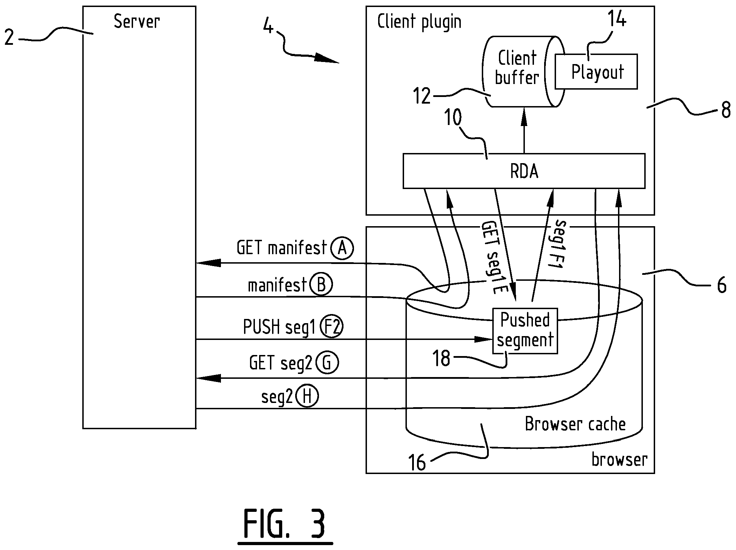

Figure 3 shows a server 2 and a client 4, wherein the client 4 comprises a browser 6 and a browser plugin 8 for HAS capabilities. The plugin 8 can only request manifests and segments via well-defined software interface towards the browser. In some implementations, no interface may exist for notifying the plugin 8 that an object was pushed by server 2 to the browser 6. The browser 6 will just add the object to the browser cache. When the plugin 8 later request the pushed object, the browser serves the requested object immediately from the local cache.

The plugin 8 comprises a rate determination algorithm (RDA) component 10 communicating with a client buffer 12. The client buffer is operatively connected to a playout component 14. The browser 6 comprises a browser cache. When initializing the streaming of media content, the client 4 requests a manifest file from server 2 by sending a "get manifest" request A via the RDA component 10 and browser 6 to server 2. Server 2 responds by sending the requested manifest file B to the browser 6 which delivers the manifest file to the RDA component 10. The server 2 also pushes the first segment F2 to the browser cache 16. The pushed segment 18 remains in browser cache such that it can be delivered to the plugin 8 when the RDA component 10 sends a request E to the browser for said first segment. As the pushed segment 18 is already in browser cache 16, the browser can immediately return segment F1 to the RDA component 10. After initialization, further segments are requested by the plugin 8 to the server 2 via a request G and the server responds to the request G by sending the requested segment H. Optionally, the server 2 may push additional data in response to receiving request A, e.g. DRM data.

In the embodiment shown, the browser 6 implementation does not allow an object to be pushed directly to the plugin 8 from the server 2. However, the invention is not limited to such implementations. The skilled person will appreciate that the limitations of the plug-in interfaces of browsers, such as the NPAPI interface, may not be present in all current and future browsers. For example, browsers may comprise native support for HAS, obviating the need for a HAS plugin 8.

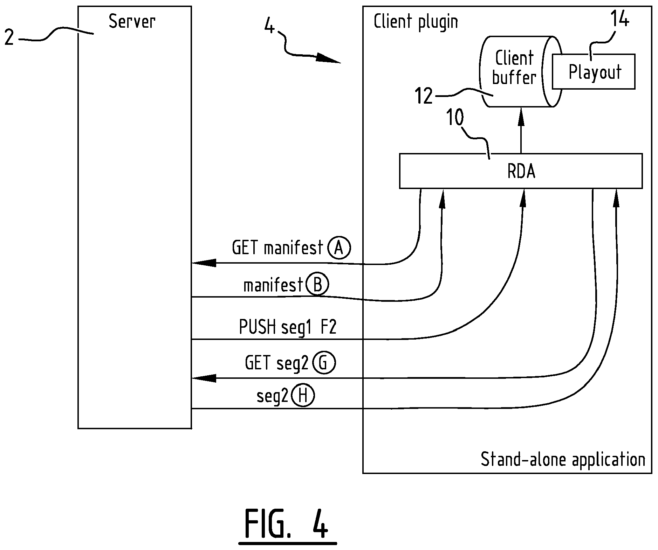

Figure 4 shows a server 2 and a client 4 wherein the client comprises a stand-alone application. The client is implemented as an integrated stand-alone application. Therefore, in contrast to the embodiment of figure 3, the RDA component 10 can be informed directly when an object is pushed by the server 2. The client 4 requests a manifest with request A, upon which the server 2 returns the manifest B and pushes the first segment F2 to the client. After initialization of the streaming, further segments are communicated by a request G by the client and a response H by the server.

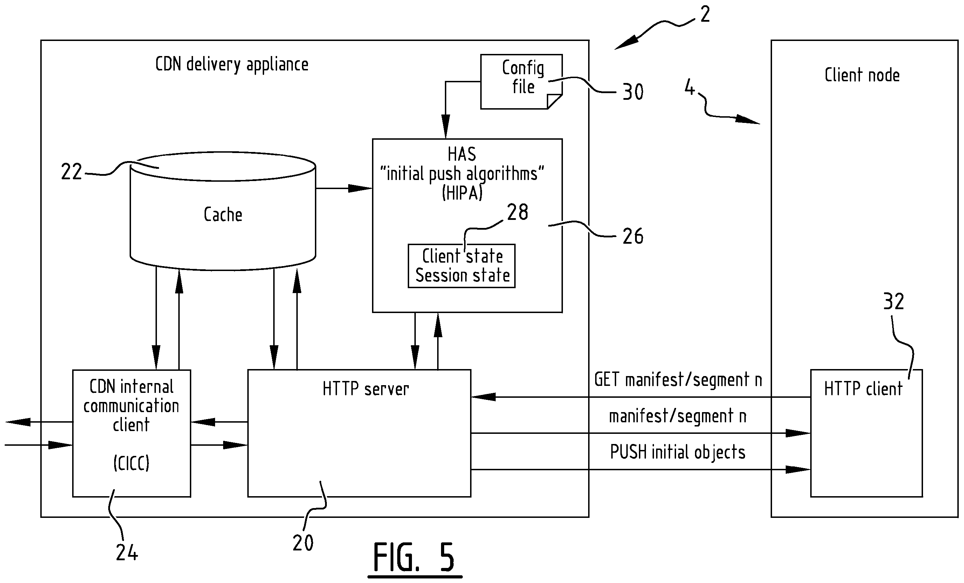

Figure 5 shows an embodiment of a content distribution network (CDN) delivery appliance 2. The CDN delivery appliance 2 comprises a HTTP server 20 which is in communication with a cache 22. HTTP server 20 is also in communication with a CDN internal communication client (CICC) 24. The CICC 24 communicates with cache 22. The HTTP server 20 is also in communication with a HAS initial push algorithm components (HIPA) which comprises a memory component 28 for storing the client state and/or session state. The CDN delivery appliance further comprises a configuration file 30 which is accessible by the HIPA. The HIPA is further in communication with the cache 22. The client node 4 comprises an HTTP client 32. The HTTP server component 20 takes care of the HTTP communication with the client. The HTTP server 20 receives get requests from the client. The HTTP server 20 performs a check to verify if the requested manifest/segment is already present in the cache 22. If present, it will provide the manifest/segment to the client. If not present, it will inform the CDN internal communication client to fetch the segment/manifest from an upstream CDN node. In case the manifest/segment was not found in cache 22, the CICC fetches the manifest/segment from an upstream CDN node. When the CICC obtains the requested manifest/segment completely or partially, it informs the HTTP server 20. The HTTP server will then take care of the transfer to the client 4 via HTTP client 32.

Each time when an HTTP request or a response is received by the HTTP server, a functional block called HAS initial push algorithms (HIPA) will be informed. HIPA 26 will disregard all requests/responses that are not HAS related. It will then use one or more algorithms to decide if and what additional manifests/segments must be pushed to the requesting client. It instructs the HTTP server to deliver the additional objects via server push. Finally, the HTTP server will push the initial objects to the client.
The one or more algorithms for determining the additional data to be pushed may use the configuration file 30 which expresses the relationship between a manifest, related DRM-objects, corresponding initial segment, etc. Furthermore, the one or more algorithms may comprise determining the segment to be pushed, i.e. select the desired bitrate of the first segment. For example, the quality of the stream may be selected as the lowest available quality as described in the requested manifest file. In another example, the quality is selected on the basis of a quality previously used by the client 2. The server 4 may track a client state or a session state, tracking the quality, i.e. bitrate, previously send to individual clients. In another example, the stream quality is selected on the basis of certain network parameters, such as latency and througput.

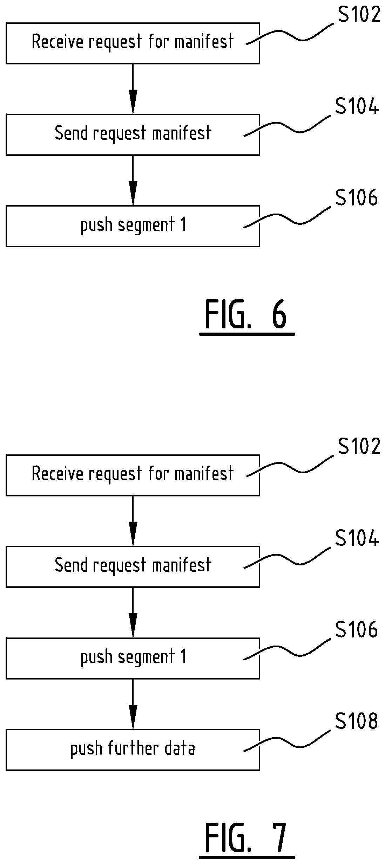

A first embodiment of the method of the invention comprises receiving a request for a manifest by a server S102 (figure 6). Subsequently, the server returns the requested manifest S104. Furthermore, the server pushes the first segment of the stream associated by the manifest file S106. It is noted that the order of steps S104 and S106 may be interchanged.

In a second embodiment of a method of the invention (figure 7), the server receives a request for a manifest S102 and in response sends the requested manifest S104. In addition to pushing the first segment of the stream corresponding to the requested manifest S106, the server pushes further data related to the stream S108. For example, the further data may comprise DRM data. It is noted that the order of the steps S104, S106, S108 can be in a different order than shown in the figure.

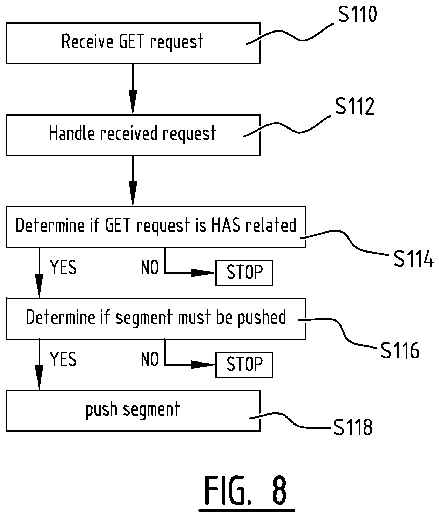

In a third embodiment of the method of the invention (figure 8) the server receives a get request from the client in step S110. In step S112 the server handles the received request. For example, if the request is a request for a manifest file, the server returns the requested manifest file. In step S114 the server determines if the get request is HAS related. If the get request is indeed HAS related, the server determines if a segment must be pushed in step S116. If the server determines that a segment must be pushed in response to the get request, the server pushes the segment in step S118. It is noted that step S112 may alternatively be performed after segment is pushed.

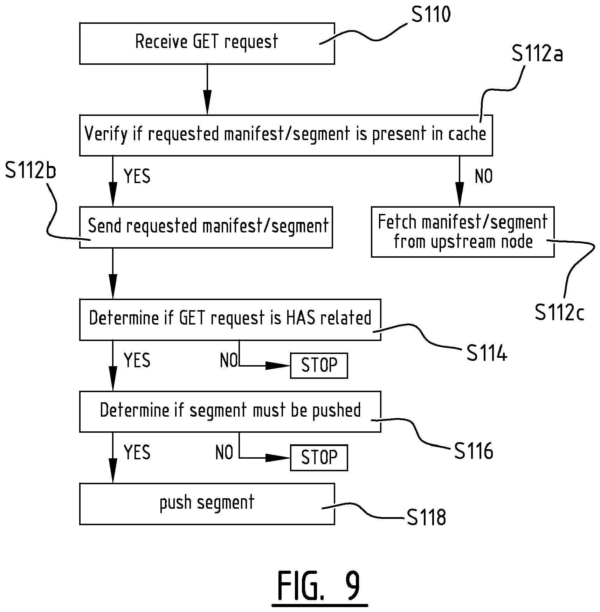

In a fourth embodiment of the method of the invention (figure 9) the server receives a request in step S110. The server verifies if the requested manifest / segment is present in the cache of the server in step S112A if the manifest / segment is present in cache, the server sends the requested manifest / segment in step S112B. Otherwise, the server fetches the manifest / segment from an upstream node in step S112C. Further steps S114/S118 correspond to those in figure 8..

A person skilled in the art would readily recognize that steps of various above-described methods can be performed by programmed computers and/or electronic devices with computation capabilities. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers and/or electronic devices with computation capabilities (where hard coded or soft coded) programmed to perform said steps of the above-described methods. The functions of the various elements shown in the figures, including any functional blocks may be provided through the use of dedicated hardware as well as hardware capable of executing software in association with appropriate software. Hardware and may include, without limitation, digital signal processor (DSP) hardware, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic.

It should be appreciated by those skilled in the art that any block diagrams herein represent conceptual views of illustrative circuitry embodying the principles of the invention. Similarly, it will be appreciated that any flow charts, flow diagrams, represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. Server (2) for streaming media content to a client (4) wherein the media content is encoded as at least one stream, the at least one stream being divided into consecutive segments, the server (2) comprising:
- a receiver configured to receive a request from the client (4) for a manifest file comprising metadata of the at least one stream; and
- a transmitter configured to, in response to the request for the manifest file:
∘ send the requested manifest file to the client (4); and
∘ push a selected segment of the consecutive segments of at the least one stream to the client (4),
**characterized in that** the transmitter is configured to push the selected segment to the client (4) before sending the requested manifest file to the client (4).

2. Server according to claim 1, wherein the server is configured for adaptive streaming of the media content, wherein the media content is encoded as at least two streams encoded at different bitrates, wherein the manifest file comprises metadata of the at least two streams and wherein the transmitter is configured to push a selected segment of the consecutive segments of a selected one of the at least two streams in response to the request for the manifest file.

3. Server according to claim 2, wherein the server is configured to select as the selected one of the at least two streams the stream having the lowest bitrate.

4. Server according to claim 2, wherein the server is configured to select as the selected one of the at least two streams the stream having a bitrate corresponding to a bitrate previously used by the client.

5. Server according to claim 2, wherein the server is configured to estimate a bitrate based on network parameters and further configured to select as the selected one of the at least two streams the stream having a bitrate corresponding to the estimated bitrate.

6. Server according to any preceding claim, wherein the server is configured for communicating with the client according to a web protocol supporting server push, wherein preferably the protocol is an HTTP protocol or SPDY protocol, more preferably HTTP 2.0 or later.

7. Server according to any of the claims 1-6, wherein the media content is encoded as at least one video on demand stream, the server being configured to select as the selected segment the first of the consecutive segments of the corresponding stream.

8. Server according to any of the claims 1-6, wherein the media content is encoded as at least one linear stream, the server being configured to select as the selected segment a segment which precedes the most recent segment of the corresponding stream by a predetermined delay.

9. Server according to claim 8 the server being configured to set the delay according to a delay previously used by the client.

10. Server according to any preceding claim, wherein the transmitter is configured to push the selected segment to the client in response to the request for the manifest file if:
- the server is currently streaming different media content to the client than the media content corresponding to the requested manifest file; or
- the server is currently not streaming media content to the client.

11. Server according to any preceding claim, wherein the transmitter is further configured push to the client further data in response to the request for the manifest file, such as DRM data.

12. Server according to any preceding claim, wherein the server is configured to use different stream priorities to control the delivery sequence of pushed data and pulled data.

13. Method for streaming media content from a server (2), to a client (4), wherein the media content is encoded as at least one stream, the at least one stream being divided into consecutive segments, the method comprising the steps of:
- receiving with the server (2) a request from the client (4) for a manifest file comprising metadata of the at least one stream;
- sending by the server (2) the requested manifest file to the client (4) in response to the request; and
- pushing from the server (2) to the client (4) a selected segment of the consecutive segments of the at least one stream in response to the request for the manifest file **characterized in that** the selected segment is pushed to the client (4) before sending the requested manifest file to the client (4).

14. A computer program product comprising non-transitory computer-executable instructions that when executed perform the steps as defined in method claim 13.

## Patentansprüche

1. Server (2) zum Streamen von Medieninhalt an einen Client (4), wobei der Medieninhalt als mindestens ein Stream codiert ist, wobei der mindestens eine Stream in aufeinander folgende Segmente geteilt ist, wobei der Server (2) Folgendes umfasst:
- einen Empfänger, der ausgelegt ist, um eine Anfrage von dem Client (4) für eine Manifest-Datei zu empfangen, die Metadaten des mindestens einen Streams umfasst; und
- einen Sender, der als Reaktion auf die Anfrage für die Manifest-Datei ausgelegt ist zum:
∘ Senden der angeforderten Manifest-Datei an den Client (4); und
∘ Pushen eines ausgewählten Segments der aufeinander folgenden Segmente des mindestens einen Streams zum Client (4),
**dadurch gekennzeichnet, dass** der Sender ausgelegt ist, um das ausgewählte Segment zum Client (4) zu pushen, bevor die angeforderte Manifest-Datei an den Client (4) gesendet wird.

2. Server nach Anspruch 1, wobei der Server zum adaptiven Streamen des Medieninhalts ausgelegt ist, wobei der Medieninhalt als mindestens zwei Streams codiert ist, die mit unterschiedlichen Bitraten codiert sind, wobei die Manifest-Datei Metadaten der mindestens zwei Streams umfasst und wobei der Sender ausgelegt ist, um ein ausgewähltes Segment der aufeinander folgenden Segmente eines Ausgewählten der mindestens zwei Streams als Reaktion auf die Anfrage für die Manifest-Datei zu pushen.

3. Server nach Anspruch 2, wobei der Server ausgelegt ist, um als Ausgewählten der mindestens zwei Streams jenen Stream auszuwählen, der die niedrigste Bitrate aufweist.

4. Server nach Anspruch 2, wobei der Server ausgelegt ist, um als Ausgewählten der mindestens zwei Streams jenen Stream auszuwählen, der eine Bitrate aufweist, die einer Bitrate entspricht, die zuvor von dem Client verwendet wurde.

5. Server nach Anspruch 2, wobei der Server ausgelegt ist, um eine Bitrate basierend auf Netzwerkparametern zu schätzen, und weiterhin ausgelegt ist, um als Ausgewählten der mindestens zwei Streams jenen Stream auszuwählen, der eine Bitrate aufweist, die der geschätzten Bitrate entspricht.

6. Server nach einem beliebigen vorstehenden Anspruch, wobei der Server ausgelegt ist zum Kommunizieren mit dem Client gemäß einem Webprotokoll, das Server-Push unterstützt, wobei vorzugsweise das Protokoll ein HTTP-Protokoll oder SPDY-Protokoll, besonders bevorzugt HTTP 2.0 oder höher ist.

7. Server nach einem der Ansprüche 1-6, wobei der Medieninhalt als mindestens ein Video-On-Demand-Stream codiert ist, wobei der Server ausgelegt ist, um als ausgewähltes Segment das erste der aufeinander folgenden Segmente des entsprechenden Streams auszuwählen.

8. Server nach einem der Ansprüche 1-6, wobei der Medieninhalt als mindestens ein linearer Stream codiert ist, wobei der Server ausgelegt ist, um als ausgewähltes Segment ein Segment auszuwählen, das dem letzten Segment des entsprechenden Streams um eine vorausbestimmte Verzögerung vorhergeht.

9. Server nach Anspruch 8, wobei der Server ausgelegt ist, um die Verzögerung gemäß einer Verzögerung festzulegen, die zuvor von dem Client verwendet wurde.

10. Server nach einem beliebigen vorstehenden Anspruch, wobei der Sender ausgelegt ist zum Pushen des ausgewählten Segments zum Client als Reaktion auf die Anfrage für die Manifest-Datei, wenn:
- der Server gerade einen anderen Medieninhalt an den Client streamt als der Medieninhalt, der der angeforderten Manifest-Datei entspricht; oder
- der Server gerade keinen Medieninhalt an den Client streamt.

11. Server nach einem beliebigen vorstehenden Anspruch, wobei der Sender weiterhin ausgelegt ist zum Pushen weiterer Daten zum Client als Reaktion auf die Anfrage für die Manifest-Datei, wie etwa DRM-Daten.

12. Server nach einem beliebigen vorstehenden Anspruch, wobei der Server zum Verwenden unterschiedlicher Stream-Prioritäten ausgelegt ist, um die Liefersequenz von Push-Daten und Pull-Daten zu steuern.

13. Verfahren zum Streamen von Medieninhalt von einem Server (2) an einen Client (4), wobei der Medieninhalt als mindestens ein Stream codiert ist, wobei der mindestens eine Stream in aufeinander folgende Segmente geteilt ist, wobei das Verfahren folgende Schritte umfasst:
- Empfangen mit dem Server (2) einer Anfrage von dem Client (4) für eine Manifest-Datei, die Metadaten des mindestens einen Streams umfasst;
- Senden durch den Server (2) der angeforderten Manifest-Datei an den Client (4) als Reaktion auf die Anfrage; und
- Pushen eines ausgewählten Segments der aufeinander folgenden Segmente des mindestens einen Streams vom Server (2) zum Client (4) als Reaktion auf die Anfrage für die Manifest-Datei,
**dadurch gekennzeichnet, dass** das ausgewählte Segment zum Client (4) gepusht wird, bevor die angeforderte Manifest-Datei an den Client (4) gesendet wird.

14. Computerprogrammprodukt, umfassend nicht-vorübergehende, computerausführbare Anweisungen, die bei Ausführung jene Schritte durchführen, die in dem Verfahren nach Anspruch 13 definiert sind.

## Revendications

1. Serveur (2) de diffusion en continu d'un contenu multimédia à un client (4) dans lequel le contenu multimédia est codé comme au moins un flux, l'au moins un flux étant divisé en segments consécutifs, le serveur (2) comprenant :
- un récepteur configuré pour recevoir une demande auprès du client (4) d'un fichier manifeste comprenant des métadonnées de l'au moins un flux ; et
- un émetteur configuré, en réponse à la demande du fichier manifeste, pour :
∘ envoyer le fichier manifeste demandé au client (4) ; et
∘ pousser un segment sélectionné des segments consécutifs de l'au moins un flux vers le client (4),
**caractérisé en ce que** l'émetteur est configuré pour pousser le segment sélectionné vers le client (4) avant d'envoyer le fichier manifeste demandé au client (4).

2. Serveur selon la revendication 1, dans lequel le serveur est configuré pour une diffusion en continu adaptative du contenu multimédia, dans lequel le contenu multimédia est codé comme au moins deux flux codés à différents débits binaires, dans lequel le fichier manifeste comprend des métadonnées des au moins deux flux et dans lequel l'émetteur est configuré pour pousser un segment sélectionné des segments consécutifs d'un flux sélectionné parmi les au moins deux flux en réponse à la demande du fichier manifeste.

3. Serveur selon la revendication 2, dans lequel le serveur est configuré pour sélectionner, en tant que flux sélectionné parmi les au moins deux flux, le flux ayant le débit binaire le plus faible.

4. Serveur selon la revendication 2, dans lequel le serveur est configuré pour sélectionner, en tant que flux sélectionné parmi les au moins deux flux, le flux ayant un débit binaire correspondant à un débit binaire précédemment utilisé par le client.

5. Serveur selon la revendication 2, dans lequel le serveur est configuré pour estimer un débit binaire sur la base de paramètres de réseau et configuré en outre pour sélectionner, en tant que flux sélectionné parmi les au moins deux flux, le flux ayant un débit binaire correspondant au débit binaire estimé.

6. Serveur selon l'une quelconque des revendications précédentes, dans lequel le serveur est configuré pour communiquer avec le client conformément à un protocole Internet prenant en charge la technique Server Push, dans lequel le protocole est de préférence un protocole HTTP ou un protocole SPDY, et de manière plus préférable un protocole HTTP 2.0 ou ultérieur.

7. Serveur selon l'une quelconque des revendications 1 à 6, dans lequel le contenu multimédia est codé comme au moins un flux vidéo à la demande, le serveur étant configuré pour sélectionner en tant que segment sélectionné le premier des segments consécutifs du flux correspondant.

8. Serveur selon l'une quelconque des revendications 1 à 6, dans lequel le contenu multimédia est codé comme au moins un flux linéaire, le serveur étant configuré pour sélectionner en tant que segment sélectionné un segment qui précède le segment le plus récent du flux correspondant selon un délai prédéterminé.

9. Serveur selon la revendication 8, le serveur étant configuré pour définir le délai conformément à un délai précédemment utilisé par le client.

10. Serveur selon l'une quelconque des revendications précédentes, dans lequel l'émetteur est configuré pour pousser le segment sélectionné vers le client en réponse à la demande du fichier manifeste si :
- le serveur diffuse actuellement en continu au client un contenu multimédia différent du contenu multimédia correspondant au fichier manifeste demandé ; ou
- le serveur ne diffuse pas actuellement le contenu multimédia au client.

11. Serveur selon l'une quelconque des revendications précédentes, dans lequel l'émetteur est en outre configuré pour pousser vers le client d'autres données en réponse à la demande du fichier manifeste, comme les données DRM.

12. Serveur selon l'une quelconque des revendications précédentes, dans lequel le serveur est configuré pour utiliser des priorités de flux différentes pour contrôler la séquence de distribution de données poussées et de données tirées.

13. Procédé de diffusion en continu d'un contenu multimédia entre un serveur (2) et un client (4), dans lequel le contenu multimédia est codé comme au moins un flux, l'au moins un flux étant divisé en segments consécutifs, le procédé comprenant les étapes suivantes :
- recevoir avec le serveur (2) une demande du client (4) pour un fichier manifeste comprenant des métadonnées de l'au moins un flux ;
- envoyer au moyen du serveur (2) le fichier manifeste demandé au client (4) en réponse à la demande ; et
- pousser entre le serveur (2) et le client (4) un segment sélectionné parmi les segments consécutifs de l'au moins un flux en réponse à la demande du fichier manifeste, **caractérisé en ce que** le segment sélectionné est poussé vers le client (4) avant d'envoyer le fichier manifeste demandé au client (4).

14. Produit de programme informatique comprenant des instructions non transitoires exécutables par ordinateur qui, lorsqu'elles sont exécutées, effectuent les étapes telles que définies dans le procédé selon la revendication 13.
